# EUROPÄISCHE PATENTSCHRIFT

(11) **EP 4 153 088 B1**
(45) Veröffentlichungstag und Bekanntmachung des Hinweises auf die Patenterteilung: **22.11.2023**
(21) Anmeldenummer: 21727152.7
(22) Anmeldetag: 21.05.2021
(51) Int. Cl.: A61C 8/00

(54) **IMPLANTAT, AUFBAU UND IMPLANTATSYSTEM**
IMPLANT, STRUCTURE AND IMPLANT SYSTEM
IMPLANT, STRUCTURE ET SYSTÈME D'IMPLANT

(30) Priorität: 22.05.2020 DE 102020113824
(43) Veröffentlichungstag der Anmeldung: 29.03.2023
(73) Patentinhaber: medentis medical GmbH, 53474 Bad Neuenahr-Ahrweiler (DE)
(72) Erfinder: SCHOLZ, Alexander, 53474 Bad Neuenahr-Ahrweiler (DE)
(74) Vertreter: Müller Schupfner & Partner Patent- und Rechtsanwaltspartnerschaft mbB
(86) Internationale Anmeldenummer: PCT/EP2021/063644
(87) Internationale Veröffentlichungsnummer: WO 2021/234142

(56) Entgegenhaltungen:
- WO-A1-03/024352
- WO-A1-2012/085039
- DE-A1-102008 027 007
- US-A- 5 782 918
- US-A1- 2007 160 955

## Beschreibung

Die Erfindung betrifft ein Implantat, einen Aufbau für ein Implantat und ein Implantatsystem, insbesondere für den Dentalbereich.

Implantatsysteme im Dentalbereich sind bereits aus dem Stand der Technik bekannt, diese dienen dazu, Zahnkronen oder ähnliche Zahnprothesen in einem Kiefer zu verankern. Die aus dem Stand der Technik bekannten Implantatsysteme umfassen unter anderem ein Implantat sowie einen Aufbau, wobei das Implantat dazu dient, im Kiefer verankert zu sein und der Aufbau dazu dient, die Zahnprothesen zu tragen und gegenüber dem Implantat zu lagern. Um eine relative Rotation zwischen dem Aufbau und dem Implantat zu verhindern verfügen diese beiden Elemente in einem Verdrehsicherungsbereich über jeweils komplementär zueinander ausgebildete formschlüssige Rotationssicherungen. Zusätzlich ist es auch bekannt, den Aufbau und das Implantat mit komplementär ausgebildeten konischen Bereichen zu versehen, um ein Eindringen von Bakterien in den Zwischenraum zwischen Implantat und Aufbau zu minimieren. Problematisch an diesen bereits bekannten Implantatsystemen ist jedoch, dass durch das Vorsehen des konischen Abschnitts und des Verdrehsicherungsbereichs eine besonders dünne Wandstärke resultiert. Dies führt sowohl zu einer schlechten Handhabbarkeit des Systems als auch dazu, dass vor dem Einsetzen des Implantsystems beim Patienten meist eine Knochenaugmentation durchgeführt werden muss, was eine zusätzliche Gefahrenquelle und Belastung für den Patienten darstellt, weil die Implantate einen zu großen Durchmesser besitzen, um die geforderten Mindestwerte der Dauerbelastung zu erfüllen.

Die DE 10 2008 027 007 A1 betrifft ein Implantatsystem mit einer teilweise konischen Oberfläche und einer biologischen Abdichtung der Verbindung zwischen Implantat und Kopfteil.

Die WO 2012/085039 zeigt ein Dentalimplantatsystem, umfassend ein Dentalimplantat zum Einfügen in den Kieferknochen eines Patienten und eine sekundäre Komponente zum Verbinden mit dem Implantat. Das Implantat umfasst einen länglichen Körper und einen koronalen Implantatkopf mit einer Bohrung, welches einen konischen Abschnitt aufweist.

Die US 5,782,918 A zeigt ebenfalls ein Implantatsystem.

Die WO 03/024352 A1 zeigt ein Verfahren zur Herstellung eines künstlichen Zahns, der an einem Kieferknochen (4) befestigt ist.

US 2007/160955 beschreibt ein Implantat mit außenliegendem implantatseitigen Anordnungsbereich. Es ist daher Aufgabe der vorliegenden Erfindung eine Implantatmöglichkeit zu schaffen, die leicht zu handhaben ist und eine nur geringe Belastung und Gefährdung für den Patienten darstellt, und bei einem minimalen Durchmesser alle Anforderungen, insbesondere in Hinblick auf die Dauerbelastung, erfüllt.

Diese Aufgabe wird mit einem Implantat gemäß dem Anspruch 1 gelöst. Weitere Vorteile, Merkmale und Ausführungsformen ergeben sich aus den Unteransprüchen, der Beschreibung sowie aus den Figuren.

Erfindungsgemäß umfasst ein Implantat, insbesondere Zahnimplantat, für ein Implantatsystem umfassend,einen, innenliegenden, implantatseitigen Anordnungsbereich,wobei der implantatseitige Anordnungsbereich dazu ausgelegt ist, zumindest abschnittsweise mit einem Aufbau zu kontaktieren,wobei der implantatseitige Anordnungsbereich einen implantatseitigen konischen Abschnitt aufweist,wobei der implantatseitige konische Abschnitt implantatseitige Verdrehsicherungsstrukturen aufweist,wobei das Implantat sich in eine Längsrichtung (L) erstreckt, und wobei die implantatseitigen Verdrehsicherungsstrukturen derart ausgebildet sind, dass diese formschlüssig eine Verdrehung des Aufbaus um die Längsrichtung (L) relativ zum Implantat verhindern bzw. verhindern können,wobei die implantatseitigen Verdrehsicherungsstrukturen jeweils zumindest eine Anlagefläche aufweisen und/oder durch eine Anlagefläche gebildet sind,wobei die Anlageflächen eben ausgestaltet sind und eine Normale (N) aufweisen, welche in einer Ebene liegt, die von einer radialen Richtung (R) und der Längsrichtung (L) aufgespannt ist,wobei die implantatseitigen Verdrehsicherungsstrukturen verjüngend in Richtung der Längsrichtung (L) ausgebildet sind,dadurch gekennzeichnet, dass der implantatseitige konische Abschnitt einen Bereich aufweist, welcher verdrehsicherungsstrukturfrei ausgebildet ist. Das Implantat dient dazu, in einem menschlichen Gewebe angeordnet zu sein, insbesondere in einem Kiefer eines Menschen. Das Implantat ist dabei vorteilhafterweise Teil eines Implantatsystems, wobei ein derartiges Implantatsystem neben einem Implantat auch einen Aufbau, einen Verbindungsgewindestift und/oder eine Zahnkrone enthalten kann. Das Implantat selbst weist dabei einen Implantierbereich auf, insbesondere an seinem äußeren Umfang, um eine Verankerung, insbesondere in einem Kiefer eines Menschen, erreichen zu können. Dieser Implantierbereich ist insbesondere als ein Außengewinde ausgebildet. Das erfindungsgemäße Implantat erstreckt sich entlang einer Längsrichtung. Diese Längsrichtung ist dabei insbesondere diejenige Richtung, in welche sich die Länge des Implantats bestimmt. In anderen Worten kann dies bedeuten, dass die Längsrichtung diejenige Richtung ist, in welchem das Implantat seine längste Haupterstreckung aufweist. Um eine Verbindung zu einem Aufbau eines Implantatsystems zu schaffen, verfügt das Implantat über einen implantatseitigen Anordnungsbereich. Dieser implantatseitige Anordnungsbereich ist derart ausgebildet, dass dieser innenliegend ist. Hierdurch kann eine besonders gut gegen Bakterien abgedichtete Verbindung zwischen dem Implantat und dem Aufbau erreicht werden. Beispielsweise ist der gesamte Anordnungsbereich durch eine zentral angeordnete Ausnehmung ausgebildet bzw. innerhalb einer solchen Ausnehmung angeordnet, wobei sich vorteilhafter Weise diese Ausnehmung in Richtung der Längsrichtung erstreckt. Der implantatseitige Anordungsbereich weist einen konischen Abschnitt auf, welcher dazu ausgelegt ist, mit einem komplementär ausgebildeten aufbauseitigen konischen Abschnitt in einem eingebauten Zustand zu kontaktieren. Die primäre Funktion des konischen Abschnitts ist es, ein Eindringen von Bakterien zwischen dem Implantat und dem Aufbau implantatseitig zu verhindern. In anderen Worten dient der implantatseitige konische Abschnitt zur Abdichtung, insbesondere um ein Eindringen von Bakterien zu verhindern. Dieser implantatseitige konische Abschnitt weist implantatseitige Verdrehsicherungsstrukturen auf. Diese implantatseitigen Verdrehsicherungsstrukturen sind dabei derart ausgelegt und/oder beschaffen, dass diese formschlüssig eine Verdrehung des Implantats relativ zu einem Aufbau um die Längsrichtung verhindern bzw. verhindern können. In anderen Worten sind die implantatseitigen Verdrehsicherungsstrukturen derart ausgebildet, dass diese formschlüssig mit komplementär ausgebildeten aufbauseitigen Verdrehsicherungsstrukturen zusammenwirken und/oder in Eingriff bringbar sind, sodass durch diese eine Verdrehung um die Längsrichtung zwischen dem Aufbau und dem Implantat formschlüssig verhindert ist. Durch das Ausbilden der implantatseitigen Verdrehsicherungsstrukturen - zumindest - im Bereich des implantatseitigen konischen Abschnitts kann erreicht werden, dass die Implantate eine besonders hohe Wandstärke aufweisen können, sodass die Gefahr des Brechens des Implantats reduziert werden kann. Alternativ oder zusätzlich bevorzugt kann durch diese Kombination des implantatseitigen konischen Abschnitts und der implantatseitigen Verdrehsicherungsstrukturen in einem Abschnitt erreicht werden, dass die Implantate dünner und zeitgleich stabil hergestellt werden können, sodass häufig auf eine Knochenaugmentation verzichtet werden kann, wobei jedoch gleichzeitig dennoch ein stabiles und mechanisch belastbares Implantat erreicht werden kann.

Vorteilhafterweise erstrecken sich die implantatseitigen Verdrehsicherungsstrukturen ausschließlich im implantatseitigen konischen Abschnitt. In anderen Worten kann dies bedeuten, dass die implantatseitigen Verdrehsicherungsstrukturen lediglich im konischen Abschnitt ausgebildet bzw. vorhanden sind. Hierdurch kann ein besonders einfach herzustellendes Implantat erreicht werden, da eine extensive Bearbeitung ausschließlich im implantatseitigen konischen Abschnitt erfolgen muss. Alternativ oder zusätzlich bevorzugt erstrecken sich die implantatseitigen Verdrehsicherungsstrukturen nicht nur im implantatseitigen konischen Abschnitt. In anderen Worten kann dies bedeuten, dass die Verdrehsicherungsstrukturen, insbesondere in Richtung der Längsrichtung, über den implantatseitigen konischen Abschnitt hinausgehen. Daher ist es prinzipiell möglich, dass die implantatseitigen Verdrehsicherungsstrukturen auch in dem oder den benachbarten Abschnitten zu dem implantatseitigen konischen Abschnitt vorhanden sind bzw. sich bis in diese Bereiche erstrecken. Hierdurch kann eine besonders mechanische belastbare formschlüssige Verdrehsicherung erreicht werden, denn hierdurch wird insbesondere die zur Verfügung stehende Verdrehsicherungsfläche erhöht, sodass die auftretenden Flächenpressungen reduziert werden können.

Zweckmäßiger Weise liegt das Verhältnis der Länge der implantatseitigen Verdrehsicherungsstrukturen in Richtung der Längsrichtung zu der Länge des implantatseitigen konischen Abschnitts in Richtung der Längsrichtung in einem Bereich von 0,6 bis 0,95, bevorzugt in einem Bereich von 0,7 bis 0,92, und besonders bevorzugt in einem Bereich von 0,8 bis 0,9. Bei einem Verhältnis im Bereich von 0,6 bis 0,95 kann eine besonders einfache Herstellung der implantatseitigen Verdrehsicherungsstrukturen erreicht werden. Liegt hingegen das Verhältnis in einem Bereich von 0,7 bis 0,92, so resultiert ein Implantat, welches besonders gut im Mund eines Patienten gehandhabt werden kann, sodass die Gesundheitsgefährdung des Patienten reduziert werden kann. Bei einem Verhältnis der Länge der implantatseitigen Verdrehsicherungsstrukturen in Richtung der Längsrichtung zu einer Länge des implantatseitigen konischen Abschnitts in Richtung der Längsrichtung in einem Bereich von 0,8 bis 0,9 hat die Anmelderin überraschenderweise herausgefunden, dass ein besonders hohes Maß an Dichtwirkung gegenüber einem Eindringen von Bakterien in den Zwischenbereich zwischen Implantat und Aufbau erreicht werden kann.

Zweckmäßiger Weise bildet der implantatseitige konische Abschnitt ein distales Ende des implantatseitigen Anordnungsbereichs in Richtung der Längsrichtung aus. Hierdurch kann ein besonders einfach herzustellendes Implantat erreicht werden, sodass Kosten gespart werden können. Unter einem distalen Ende des implantatseitigen Anordnungsbereichs ist dabei zu verstehen, dass der konische Abschnitt zumindest in eine Richtung der Längsrichtung den implantatseitigen Anordnungsbereich begrenzt bzw. dessen Endabschnitt ausbildet. Vorteilhafterweise bildet dabei der implantatseitige konische Abschnitt einen Mündungsbereich des innenliegenden implantatseitigen Anordnungsbereichs aus. In anderen Worten kann dies bedeuten, dass der implantatseitige konische Abschnitt insbesondere das distale Ende des implantatseitigen Anordnungsbereichs ausbildet, welches in der eingebauten Position vom Kiefer am weitesten beabstandet ist.

Zweckmäßiger Weise weist der implantatseitige Anordnungsbereich einen zylindrischen Abschnitt auf, wobei der zylindrische Abschnitt dazu ausgelegt ist, eine Axialführung für einen Aufbau auszubilden. Hierdurch kann bei der Montage des Aufbaus bzw. bei der Anordnung des Aufbaus relativ zum Implantat eine axiale Führung des Aufbaus erreicht werden, sodass der Aufbau deutlich einfacher im Mund eines Patienten gehandhabt werden kann. Darüber hinaus kann der zylindrische Abschnitt auch noch als Kraftübertragungsfläche für radiale und tangentiale Kräfte genutzt werden, sodass durch das Vorsehen eines zylindrischen Abschnitts die mechanische Belastbarkeit gesteigert werden kann.

In einer vorteilhaften Weiterbildung schließt sich der zylindrische Abschnitt in Längsrichtung an den implantatseitigen konischen Abschnitt an. Hierdurch kann eine besonders kompakte Bauweise erreicht werden, sodass hierdurch die Handhabung des Aufbaus beim Einbau weiter vereinfacht werden kann. Unter einem Anschließen ist dabei zu verstehen, dass der zylindrische Abschnitt unmittelbar zu dem implantatseitigen konischen Abschnitt in Längsrichtung gesehen benachbart ist, wobei zwischen dem zylindrischen Abschnitt und dem implantatseitigen konischen Abschnitt jedoch beispielsweise eine kleine Übergangsphase oder eine - rundung vorgesehen sein kann.

Vorteilhafterweise weist der implantatseitige Anordnungsbereich einen Gewindeabschnitt auf, dieser Gewindeabschnitt dient insbesondere dazu, einen Aufbau mit dem Implantat zu verschrauben bzw. verspannen zu können. Daher kann der Gewindeabschnitt insbesondere dazu dienen, den Aufbau über einen Verbindungsgewindestift mit dem Implantat zu verspannen.

Vorteilhafterweise schließt sich der Gewindeabschnitt in Längsrichtung an den zylindrischen Abschnitt an. Hierdurch kann eine besonders kompakte Bauweise bzw. Ausgestaltung des Implantats erreicht werden.

Erfindungsgemäß weist der implantatseitige konische Abschnitt einen Bereich, insbesondere in Richtung der Längsrichtung, auf, welcher verdrehsicherungsstrukturfrei ausgebildet ist. Hierdurch kann ein besonders hohes Maß an Dichtwirkung erreicht werden, denn durch das zumindest bereichsweise verdrehsicherungsstrukturfreie Ausbilden des implantatseitigen konischen Bereichs ist zumindest ein gewisser Teil des konischen Abschnitts ausschließlich konisch ausgebildet, sodass ein besonders hohes Maß an Dichtewirkung erreicht werden kann. Unter einem verdrehsicherungsstrukturfreien Abschnitt kann unter anderem verstanden werden, dass ein gewisser Abschnitt in Längsrichtung gesehen ausschließlich konisch ausgebildet ist.

In einer vorteilhaften Weiterbildung bildet der verdrehsicherungsstrukturfreie Bereich des implantatseitigen konischen Abschnitts eine dem distalen Ende des implantatseitigen Anordnungsbereichs in Richtung der Längsrichtung gegenüber liegenden Endabschnitt des implantatseitigen konischen Abschnitts aus. Hierdurch kann die Fertigung des konischen Abschnitts weiter erleichtert werden, sodass Kosten gespart werden können. In anderen Worten kann zumindest der Abschnitt des implantatseitigen konischen Abschnitts verdrehsicherungsstrukturfrei ausgebildet sein, welcher in Richtung des Schwerpunkts des Implantats orientiert ist. Daher kann beispielsweise der in Längsrichtung weiter innenliegende Bereich des konischen Abschnitts verdrehsicherungsstrukturfrei ausgebildet sein. Alternativ oder zusätzlich bevorzugt kann insbesondere der Bereich des implantatseitigen konischen Abschnitts verdrehsicherungsstrukturfrei sein, welcher nächstliegend zum zylindrischen Abschnitt in Längsrichtung ausgebildet ist. Weiter alternativ oder weiter zusätzlich bevorzugt kann auch derjenige Teil des implantatseitigen konischen Abschnitts verdrehsicherungsstrukturfrei ausgebildet sein, welcher in Richtung der Längsrichtung einen distalen Endabschnitt des implantatseitigen konischen Abschnitts ausbildet. In anderen Worten kann daher alternativ oder zusätzlich bevorzugt auch derjenige Bereich des implantatseitigen konischen Abschnitts verdrehsicherungsstrukturfrei ausgebildet sein, welcher in Längsrichtung gesehen vom zylindrischen Abschnitts weg weist. In einer bespielhaften Ausführungsform kann daher der konische Abschnitt drei Bereiche aufweisen, wobei in Längsrichtung gesehen zunächst ein verdrehsicherungsstrukturfreier Bereich vorliegt, auf welchem in Längsrichtung ein Bereich folgt, welcher implantatseitige Verdrehsicherungsstrukturen aufweist, auf welchen wiederum in Längsrichtung ein dritter Bereich folgt, welcher ebenfalls verdrehsicherungsstrukturfrei ausgebildet ist.

Die implantatseitigen Verdrehsicherungsstrukturen weisen jeweils zumindest eine Anlagefläche auf und/oder sind die implantatseitigen Verdrehsicherungsstrukturen durch eine Anlagefläche gebildet, wobei die Anlageflächen eben ausgestaltet sind und eine Normale aufweisen, welche in einer Ebene liegt, die von einer Radialrichtung und der Längsrichtung aufgespannt ist. Die Radialrichtung weist dabei radial von der Längsrichtung weg. In anderen Worten kann bei einem Zylinderkoordinatensystem die Längsrichtung die Höhenrichtung ausbilden und die Radialrichtung die radiale Richtung. Die Anlageflächen sind dabei diejenigen Flächen der Verdrehsicherungsstrukturen, welche dazu dienen, mit insbesondere komplementär ausgebildeten Flächen eines Aufbaus zu kontaktieren, um so eine formschlüssige Verdrehsicherung zwischen dem Aufbau und dem Implantat zu erreichen. Durch die ebene Ausgestaltung der Anlageflächen derart, dass diese Anlageflächen jeweils eine Normale aufweisen, welche in einer Ebene liegt, die von der radialen Richtung und er Längsrichtung aufgespannt ist, kann die implantatseitige Verdrehsicherungsstruktur besonders einfach hergestellt werden. Darüber hinaus kann hierdurch auch noch ein besonders hohes Maß an Drehmomentübertragung erreicht werden, sodass ein besonders belastbares Implantatsystem resultiert.

Zweckmäßigerweise bilden die Anlagenflächen oder die Verdrehsicherungsstrukturen, insbesondere in einer Ebene senkrecht zu der Längsrichtung, einen Vielkant, insbesondere einen Sechskant, aus. Hierdurch kann eine besonders belastbare formschlüssige Verdrehsicherung erreich werden, sodass ein besonders mechanisch belastbares Implantatsystem, bzw. Implantat resultiert. In anderen Worten können die Verdrehsicherungsstrukturen derart, insbesondere in einer Schnittebene, welche senkrecht zur Längsrichtung steht, angeordnet sein, dass diese einen Vielkant ausbilden. Ein Vielkant kann beispielsweise ein Dreikant, ein Vierkant, Sechskant, ein Achtkant, ein Torx bzw. Sechsrund, oder ein Achtrund sein.

Die implantatseitigen Verdrehsicherungsstrukturen sind verjüngend in Richtung der Längsrichtung ausgebildet. Hierdurch kann ein besonders hohes Maß an Dichtwirkung erreicht werden, denn durch die verjüngende Ausbildung der implantatseitigen Verdrehsicherungsstruktur können auch diese ein besonders hohes Maß an Dichtwirkung erreichen bzw. bereitstellen. Zusätzlich kann durch diese verjüngende Ausgestaltung der implantatseitigen Verdrehsicherungsstrukturen auch noch erreicht werden, dass die Verdrehsicherungsstruktur mechanisch belastbarer sind, denn hierdurch kann die zur Verfügung stehende Fläche für die formschlüssige Drehmomentübertragung um die Längsrichtung gesteigert werden, sodass die auftretende Flächenpressung sinkt. Unter einer verjüngenden Ausbildung der (implantatseitigen) Verdrehsicherungsstrukturen kann dabei Verstanden werden, dass der mittlere Abstand der Verdrehsicherungsstrukturen zur Längsrichtung entlang ihres Verlaufs in Längsrichtung abnehmend ist. Beispielsweise kann dies dadurch erreicht werden, dass die Verdrehsicherungsstrukturen pfeilartig in Relation zur Längsrichtung ausgebildet sind.

In einer vorteilhaften Weiterbildung bilden die implantatseitigen Verdrehsicherungsstrukturen, insbesondere die Anlageflächen, einen ersten implantatseitigen Verjüngungswinkel mit der Längsrichtung aus, insbesondere in einem Bereich von 8° bis 14°, bevorzugt in einem Bereich von 10° bis 12°. Durch das Vorsehen eines, insbesondere in Längsrichtung konstanten, Verjüngungswinkels zwischen dem implantatseitigen Verdrehsicherungsstrukturen und der Längsrichtung kann erreicht werden, dass die Verdrehsicherungsstrukturen besonders einfach herzustellen sind. Bei einem implantatseitigen Verjüngungswinkel in einem Bereich von 8° bis 14° hat die Anmelderin überraschender Weise herausgefunden, dass ein besonders hohes Maß an Dichtwirkung erreicht werden kann. Sollte der implantatseitige Verjüngungswinkel in einem Bereich von 10° bis 12° liegen, so kann hierdurch eine besonders einfache Handhabung des Implantats erreicht werden, denn hierdurch kann die Wahrscheinlichkeit eines Verkantens des Implantats relativ zu einem Aufbau bei der Montage verringert werden.

Zweckmäßigerweise bildet der implantatseitige konische Abschnitt einen implantatseitigen Konuswinkel mit der Längsrichtung, wobei der implantatseitige Konuswinkel in einem Bereich von 8° bis 14°, bevorzugt in einem Bereich von 10° bis 12° liegt. In anderen Worten kann der Steigungswinkel des konischen Bereichs oder der konischen Bereiche des implantatseitigen konischen Abschnitts einen Konuswinkel mit der Längsrichtung in einem Bereich von 8° bis 14°, bevorzugt in einem Bereich von 10° bis 12°, ausbilden. Für die Bestimmung des implantatseitigen Konuswinkels ist daher lediglich der Öffnungswinkel der konisch ausgebildeten Bereiche des implantatseitigen konischen Abschnitts mit der Längsrichtung maßgeblich. Daher ist insbesondere ein möglicher Winkel nicht maßgeblich für die Bestimmung des implantatseitigen Konuswinkels, welchen die Verdrehsicherungsstrukturen des implantatseitigen konischen Abschnitts mit der Längsrichtung bilden. Beim einem implantatseitigen Konuswinkel im Bereich von 8° bis 14° kann ein besonders hohes Maß an Dichtwirkung erreicht werden, sodass das Eindringen von Bakterien erschwert wird. Sollte der implantatseitige Konuswinkel jedoch in einem Bereich von 10° bis 12° liegen, so kann hierdurch eine besonders einfache Einführung eines Aufbaus in den implantatseitigen konischen Abschnitt erreicht werden, sodass hierdurch die Montage und besonders die Demontage des Aufbaus erleichtert werden kann.

Ein weiterer Aspekt kann einen Aufbau betreffen, welcher insbesondere dazu ausgelegt ist, mit einem erfindungsgemäßen Implantat verbunden zu werden bzw. zu sein. Ein derartiger Aufbau, insbesondere Zahnimplantataufbau, für ein Implantatsystem kann einen, insbesondere außenliegenden, Verbindungsbereich umfassen, wobei der Verbindungsbereich dazu ausgelegt ist, zumindest abschnittsweise mit einem Implantat, insbesondere wie vorgehend und nachfolgend beschrieben, zu kontaktieren, wobei der Verbindungsbereich einen aufbauseitigen konischen Abschnitt aufweist, wobei der aufbaueiseitige konische Abschnitt aufbauseitige Verdrehsicherungsstrukturen aufweist, wobei der Aufbau sich in eine Längserstreckungsrichtung erstreckt, und wobei die aufbauseitigen Verdrehsicherungsstrukturen derart ausgebildet sind, dass diese formschlüssig eine Verdrehung des Aufbaus um die Längserstreckungsrichtung relativ zum Implantat verhindern bzw. verhindern können. Durch das Ausbilden des Aufbaus derart, dass der aufbauseitige konische Abschnitt aufbauseitige Verdrehsicherungsstrukturen aufweist, resultiert ein besonders kompakter Aufbau, welcher dennoch mechanisch stabil ist und eine hohe Dichtwirkung gegenüber dem Eindringen von Bakterien erreichen kann. In Hinblick auf die weiteren möglichen Vorteile dieser Ausgestaltung sei auch auf die obigen Ausführungen betreffen, die erfindungsgemäße Ausgestaltung eines Implantats verwiesen. In anderen Worten kann das Implantat die obig dargelegten Merkmale, Vorteile, Ausgestaltungen und/oder Ausführungsformen des Implantats in komplementärer Ausgestaltung aufweisen. Daher können insbesondere die obig dargelegten Merkmale, Vorteile, Ausgestaltungen und/oder Ausführungsformen in Hinblick auf das Implantat auch in einem erfindungsgemäßen Aufbau vorgesehen sein und umgekehrt. Im nachfolgenden sind einige dieser Merkmale, Vorteile, Ausgestaltungen und/oder Ausführungsformen des Aufbaus beispielhaft dargelegt.

Vorteilhafterweise erstrecken die aufbauseitigen Verdrehsicherungsstrukturen sich ausschließlich im aufbauseitigen konischen Abschnitt. Hierdurch kann eine besonders hohe Dichtwirkung erreicht werden. Alternativ oder zusätzlich bevorzugt erstrecken die aufbauseitigen Verdrehsicherungsstrukturen sich vollständig über den aufbauseitigen konischen Abschnitt in Richtung der Längstreckungsrichtung hinaus. In anderen Worten können die Verdrehsicherungsstrukturen sich ausgehend vom aufbauseitigen konischen Abschnitt in Längstreckungsrichtung benachbarte Bereiche erstrecken. Hierdurch kann eine besonders belastbare Verdrehsicherung erreicht werden.

Vorteilhafterweise liegt das Verhältnis der Länge der aufbauseitigen Verdrehsicherungsstrukturen in Richtung der Längserstreckungsrichtung zu der Länge des aufbauseitigen konischen Abschnitts in Richtung der Längserstreckungsrichtung in einem Bereich von 0,6 bis 0,95, bevorzugt in einem Bereich von 0,7 bis 0,92, und besonders bevorzugt in einem Bereich von 0,8 bis 0,9. Bei einem Verhältnis von 0,6 bis 0,95 resultiert ein besonders einfach herzustellender Aufbau. Sollte das Verhältnis jedoch in einem Bereich von 0,7 bis 0,92 liegen, so kann ein besonders einfach zu handhabender Aufbau erreicht werden, sodass die Platzierung des Aufbaus im Mund eines Patienten vereinfacht werden kann. Bei einem Verhältnis im Bereich von 0,8 bis 0,9 resultiert eine besonders hohe Dichtwirkung, sodass das Eindringen von Bakterien reduziert bzw. erschwert werden kann.

Vorteilhafterweise bildet der aufbauseitige konische Abschnitt ein distales Ende des Verbindungsbereichs in Richtung der Längserstreckungsrichtung aus. In anderen Worten kann dies bedeuten, dass der konische Abschnitt in eine distale Richtung in Richtung der Längserstreckungsrichtung zwar nicht unbedingt den Aufbau selbst begrenzt, jedoch denjenigen Bereich des Aufbaus in Längsrichtung abschließen kann, welcher dazu ausgelegt ist, mit einem Implantat zu kontaktieren. Hierdurch kann ein besonders einfach herzustellender Aufbau erreicht werden, sodass Kosten gespart werden können.

Vorteilhafterweise weist der Verbindungsbereich einen aufbauseitigen zylindrischen Abschnitt auf, wobei der aufbauseitige zylindrische Abschnitt dazu ausgelegt ist, eine Axialführung auszubilden, insbesondere z.B. im Zusammenspiel mit einem zylindrischen Abschnitt eines Implantats. Hierdurch kann eine deutliche Vereinfachung der Handhabbarkeit im Mund erreicht werden, sodass Verletzungen des Patienten bei der Montage des Implantats vermieden werden können. Darüber hinaus kann der zylindrische Abschnitt auch noch dazu genutzt werden, tangentiale bzw. radiale Kräfte zu übertragen, sodass durch das Vorsehen eines zylindrischen Abschnitts im Aufbau die mechanische Belastbarkeit gesteigert werden kann.

Zweckmäßigerweise schließt der aufbauseitige zylindrische Abschnitt sich in Längserstreckungsrichtung an den aufbauseitigen konischen Abschnitt an. Hierdurch kann eine besonders kompakte Bauweise erreicht werden.

Zweckmäßigerweise weisen die aufbauseitigen Verdrehsicherungsstrukturen jeweils zumindest eine Übertragungsfläche auf, bevorzugt zwei Übertragungsflächen, wobei die Übertragungsflächen eben ausgestaltet sind, und eine Normale aufweisen, welche in einer Ebene liegt, die von einer Radialrichtung und der Längserstreckungsrichtung aufgespannt ist. Die Radialrichtung bildet dabei eine radiale Richtung zur Längserstreckungsrichtung aus. In anderen Worten kann daher die Längserstreckungsrichtung bei einem Zylinderkoordinatensystem die Höhenrichtung ausbilden und die Radialrichtung die radiale Koordinate des Zylinderkoordinatensystems. Im Allgemeinen kann dabei gelten, dass die Radialrichtung in einem montierten Zustand des Aufbaus relativ zu einem Implantat parallel zur radialen Richtung und die Längserstreckungsrichtung parallel zur Längsrichtung ausgerichtet sind. Durch das Vorsehen von eben ausgebildeten Übertragungsflächen, welche eine Normale aufweisen, die in einer Ebene liegt, die von der Radialrichtung und der Längserstreckungsrichtung aufgespannt ist, kann ein besonders einfach herzustellender Aufbau erreicht werden, wobei ein solcher Aufbau zeitgleich ein besonders hohes Maß an Drehmomentübertragung ermöglichen kann. Die Übertragungsflächen der Verdrehsicherungsstrukturen sind dabei insbesondere komplementär zu den Anlageflächen des Implantats ausgebildet und dazu ausgelegt mit diesen flächig zu kontaktieren. In anderen Worten können die Übertragungsflächen und die Anlageflächen kontaktierende Flächenpärchen miteinander ausbilden, um so ein Drehmoment zwischen dem Aufbau und dem Implantat um die Längserstreckungsrichtung bzw. um die Längsrichtung formschlüssig übertragen zu können.

Zweckmäßigerweise bilden die Übertragungsflächen und/oder die aufbauseitigen Verdrehsicherungsstrukturen, insbesondere in einer Ebene senkrecht zu der Längserstreckungsrichtung, einen Vielkant, insbesondere einen Sechskant, aus. Hierdurch kann ein besonders hohes Maß an formschlüssiger Verdrehsicherung ermöglicht werden. Darüber hinaus kann auch ein Vielkant leicht hergestellt werden, sodass ein kostengünstiger Aufbau resultiert. Vorteilhafterweise ist dabei der Vielkant der aufbauseitigen Verdrehsicherungsstrukturen bzw. der Übertragungsfläche derart ausgebildet, dass dieser komplementär zu einem durch die Anlageflächen des Implantats ausgebildeten Vielkants ausgebildet ist.

Zweckmäßigerweise sind die aufbauseitigen Verdrehsicherungsstrukturen verjüngend in Richtung der Längserstreckungsrichtung ausgebildet. In anderen Worten können die aufbauseitigen Verdrehsicherungsstrukturen in ähnlicher Weise verjüngend ausgebildet sein, wie dies bereits im Hinblick auf das Implantat und dessen Anlageflächen bzw. Verdrehsicherungsstrukturen dargelegt wurde.

Vorteilhafterweise bilden die Übertragungsflächen und/oder die aufbauseitigen Verdrehsicherungsstrukturen einen zweiten Verjüngungswinkel mit der Längserstreckungsrichtung, insbesondere in einem Bereich von 8° bis 14°, bevorzugt in einem Bereich von 10° bis 12°. In anderen Worten können die Übertragungsflächen und/oder die aufbauseitigen Verdrehsicherungsstrukturen einen Verjüngungswinkel mit der Längserstreckungsrichtung bilden. Hierdurch kann eine besonders einfache Herstellung erreicht werden. Sollte der zweite Verjüngungswinkel in einem Bereich von 8° bis 14° liegen, so kann ein besonders hohes Maß an Dichtwirkung erzielt werden. Liegt der zweite Verjüngungswinkel jedoch in einem Bereich von 10° bis 12°, so kann hierdurch eine besonders einfache Handhabung des Aufbaus erreicht werden, denn hierdurch kann die Wahrscheinlichkeit eines Verkantens des Aufbaus relativ zu einem Implantat bei der Montage verringert werden. Vorteilhafterweise bildet der aufbauseitige konische Abschnitt einen aufbauseitigen Konuswinkel mit der Längserstreckungsrichtung, wobei der aufbauseitige Konuswinkel in einem Bereich von 8° bis 14°, bevorzugt einem Bereich von 10° bis 12° liegt. In anderen Worten kann der aufbauseitige konische Abschnitt mit seinen ausschließlich konisch ausgebildeten Bereichen einen aufbauseitgen Konuswinkel mit der Längserstreckungsrichtung bilden. Dieser aufbauseitige Konuswinkel liegt bevorzugt in einem Bereich von 8° bis 14°. Hierdurch kann ein hohes Maß an Dichtwirkung durch den aufbauseitigen konischen Abschnitt erreicht werden. Sollte der aufbauseitige Konuswinkel jedoch in einem Bereich von 10° bis 12° liegen, so kann hierdurch ein besonders einfaches Handhaben des Aufbaus erreicht werden, sodass Verletzungen des Patienten vorgebeugt werden kann.

Ein weiterer Aspekt kann ein Implantatsystem betreffen, wobei das Implantatsystem ein, insbesondere wie vorgehend und nachfolgend beschriebenes, Implantat und ein, insbesondere wie vorgehend und nachfolgend beschriebenen, Aufbau und einen Verbindungsgewindestift aufweist. Hierdurch können die vorgehend dargelegten Vorteile betreffend das Implantat bzw. den Aufbau auch in einem Implantatsystem realisiert werden. Der vorhandene Verbindungsgewindestift dient dabei dazu, dass Implantat mit dem Aufbau zu verspannen.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1:: Einen Längsschnitt durch ein Implantat;
- Figur 2:: Eine Frontalansicht eines Implantats;
- Figur 3:: Eine Seitenansicht eines Aufbaus;
- Figur 4:: Einen Teillängsschnitt entlang eines erfindungsgemäßen Aufbaus und
- Figur 5:: Eine Frontalansicht entlang der Längserstreckungsrichtung auf einen Aufbau.

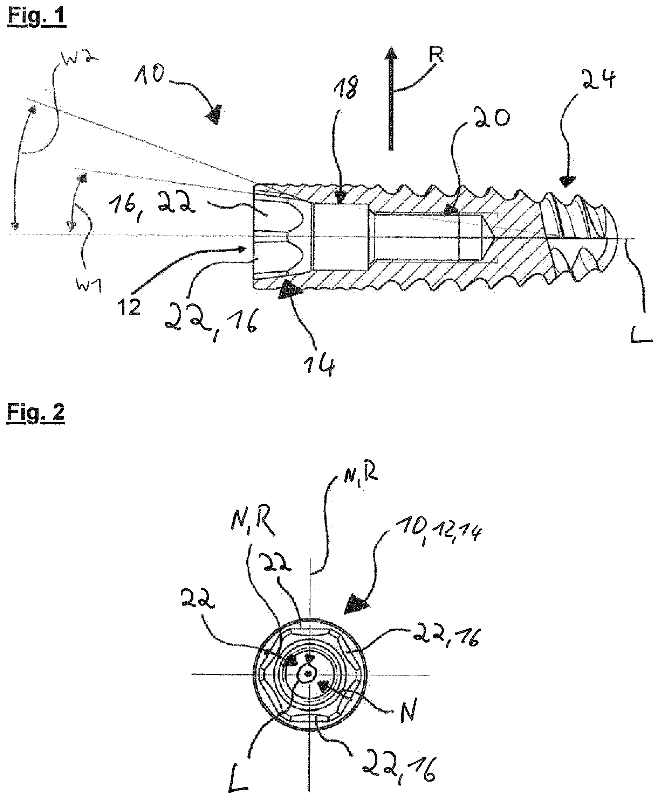

In der **Figur 1** ist ein Implantat 10 gezeigt, welches sich entlang einer Längsrichtung L erstreckt. In seinem äußeren Bereich weist das Implantat 10 einen Implantierbereich 24 in Form eines Gewindes auf. Dieser Implantierbereich 24 ist dabei dazu ausgelegt, in einem Kiefer eines Patienten angeordnet zu sein. In anderen Worten ist daher das in Figur 1 gezeigte Implantat 10 ein Zahnimplantat. Innenliegend im Implantat 10 ist der implantatseitige Anordnungsbereich 12 angeordnet.

Dieser innenliegende implantatseitige Anordnungsbereich 12 verfügt über einen implantatseitigen konischen Abschnitt 14, welcher eine grundlegend konische Ausgestaltung aufweist. Diese grundlegende konische Ausgestaltung des implantatseitigen konischen Abschnitts 14 wird dabei dadurch erreicht, dass die perfekt konische Ausgestaltung des implantatseitigen konischen Abschnitts 14 durch die dort vorhanden Verdrehsicherungsstrukturen 16 zerstört bzw. durchbrochen wird.

Dieser implantatseitige konische Abschnitt 14 bildet einen implantatseitigen Konuswinkel W2 mit der Längsrichtung L, insbesondere wie dargestellt in einem Übergangsbereich zu dem zylindrischen Abschnitt 18. In dem implantatseitigen konischen Abschnitt 14 sind die Verdrehsicherungsstrukturen 16 in Form von Anlagenflächen 22 vorhanden. Diese Anlageflächen 22 weisen dabei eine Normale N auf, welche in einer Ebene liegt, die von der Längsrichtung L und der radialen Richtung R gebildet ist. Die Anlageflächen 22 bilden dabei einen ersten implantatseitigen Verjüngungswinkel W1 mit der Längsrichtung L. In dem in Figur 1 gezeigten Ausführungsbeispiel bildet der implantatseitige konische Abschnitt 14 ein distales Ende des implantatseitigen Anordnungsbereichs 12 in Richtung der Längsrichtung L aus. Der implantatseitige Anordnungsbereich 12 weist auch einen zylindrischen Abschnitt 18 auf, wobei der zylindrische Abschnitt 18 sich in Längsrichtung L an den implantatseitigen konischen Abschnitt 14 anschließt. Darüber hinaus verfügt der implantatseitige Anordnungsbereich 12 auch noch über einen Gewindeabschnitt 20, welcher sich in Längsrichtung L an den zylindrischen Abschnitt 18 anschließt.

In der **Figur 2** ist eine Frontalansicht in Längsrichtung L des Implantats 10 bzw. des implantatseitigen Anordnungsbereich 12 gezeigt. Die in der Figur 2 dargelegte Ausführungsform des Implantats 10 kann dabei prinzipiell zu der in der Figur 1 dargestellte Ausführungsform passen. Der implantatseitige Anordnungsbereich 12 weist in einer Ebene senkrecht zu der Längsrichtung L einen Vielkant auf, welcher durch die Anlageflächen 22 bzw. durch die implantatseitigen Verdrehsicherungsstrukturen 16 gebildet ist. Die implantatseitigen Verdrehsicherungsstrukturen 16 sind dabei verjüngend in Richtung der Längsrichtung L ausgebildet. Die Anlageflächen 22 weisen dabei eine Normale N auf, welche in einer Ebene liegt, die von der Längsrichtung L und der radialen Richtung R gebildet ist.

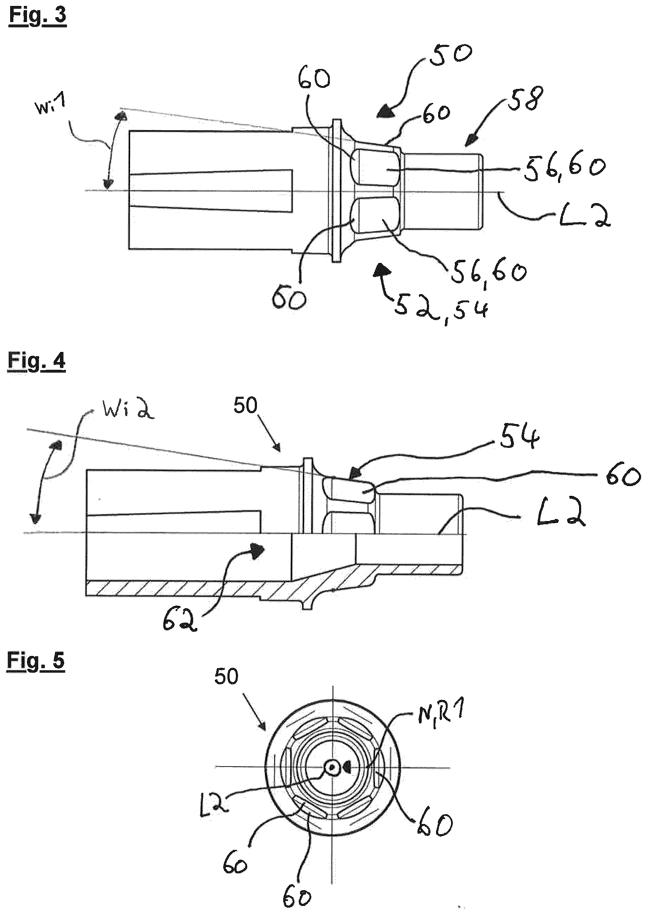

In der **Figur 3** ist ein Aufbau 50 gezeigt, welcher als ein Zahnimplantataufbau ausgebildet ist. Der Aufbau 50 weist dabei einen außenliegenden Verbindungsbereich 52 auf, wobei dieser Verbindungsbereich 52 dazu ausgelegt ist, mit einem Implantat 10, insbesondere mit einem implantatseitigen Anordnungsbereich 12 eines Implantats 10, zu kontaktieren. Der Verbindungsbereich 52 verfügt über einen aufbauseitigen konischen Abschnitt 54, wobei in dem aufbauseitigen konischen Abschnitt 54 aufbauseitige Verdrehsicherungsstrukturen 56 angeordnet sind. Diese aufbauseitigen Verdrehsicherungsstrukturen 56 sind in der dargelegten Ausführungsform als ebene Übertragungsflächen 60 ausgebildet. Nächstliegend zum aufbauseitigen konischen Abschnitt 54 schließt sich ein aufbauseitiger zylindrischer Abschnitt 58 in Längserstreckungsrichtung L2 an. Die Übertragungsflächen 60 bzw. die aufbauseitigen Verdrehsicherungsstrukturen 56 sind dabei verjüngend in Richtung der Längserstreckungsrichtung L2 ausgebildet und bilden einen zweiten Verjüngungswinkel Wi1 mit der Längserstreckungsrichtung L2 aus.

In der **Figur 4** ist eine Teilschnittansicht durch einen Aufbau 50 gezeigt. Im Inneren des Aufbaus 50 ist ein Spannbereich 62 angeordnet, welcher - wie dargestellt - zumindest teilweise konisch ausgebildet sein kann und dazu dient, mit Hilfe eines Verbindungsgewindestifts 80 den Aufbau 50 mit einem Implantat 10 zu verspannen.

In der **Figur 5** ist eine Frontalansicht in Längserstreckungsrichtung L2 des Aufbaus 50 gezeigt. Der in der Figur 5 dargestellte Aufbau 50 kann dabei zu der in der Figur 3 und/oder zu der in der Figur 4 gezeigten Ausführungsform passen. Der Aufbau 50 verfügt dabei über eine Vielzahl von Übertragungsflächen 60, welche jeweils eine Normale N aufweisen, diese Normale N liegt dabei in einer Ebene, die durch die Radialrichtung R1 und durch die Längserstreckungsrichtung L2 aufgespannt ist. Wie aus der Figur 50 ersichtlich ist, bilden die Übertragungsflächen 60 in einer Ebene, welche senkrecht zu der Längserstreckungsrichtung L2 steht, einen Vielkant in Form eines Sechskantes miteinander aus.

### Bezugszeichenliste:

- 1: - Implantatsystem
- 10: - Implantat
- 12: - implantatseitiger Anordnungsbereich
- 14: - implantatseitiger konischer Abschnitt
- 16: - implantatseitige Verdrehsicherungsstruktur
- 18: - zylindrischer Abschnitt
- 20: - Gewindeabschnitt
- 22: - Anlagefläche
- 24: - Implantierbereich
- 50: - Aufbau
- 52: - Verbindungsbereich
- 54: - aufbauseitiger konischer Abschnitt
- 56: - aufbauseitige Verdrehsicherungsstrukturen
- 58: - aufbauseitiger zylindrischer Abschnitt
- 60: - Übertragungsfläche
- 62: - Spannbereich
- 80: - Verbindungsgewindestift
- L: - Längsrichtung
- L2: - Längserstreckungsrichtung
- N: - Normale
- R: - radialen Richtung
- R1: - Radialrichtung
- W1: - erster Verjüngungswinkel
- Wi1: - zweiter Verjüngungswinkel
- W2: - implantatseitiger Konuswinkel
- Wi2: - aufbauseitiger Konuswinkel

## Patentansprüche

1. Implantat (10), insbesondere Zahnimplantat, für ein Implantatsystem (1) umfassend,
einen, innenliegenden, implantatseitigen Anordnungsbereich (12),
wobei der implantatseitige Anordnungsbereich (12) dazu ausgelegt ist, zumindest abschnittsweise mit einem Aufbau (50) zu kontaktieren,
wobei der implantatseitige Anordnungsbereich (12) einen implantatseitigen konischen Abschnitt (14) aufweist,
wobei der implantatseitige konische Abschnitt (14) implantatseitige Verdrehsicherungsstrukturen (16) aufweist,
wobei das Implantat (10) sich in eine Längsrichtung (L) erstreckt, und
wobei die implantatseitigen Verdrehsicherungsstrukturen (16) derart ausgebildet sind, dass diese formschlüssig eine Verdrehung des Aufbaus (50) um die Längsrichtung (L) relativ zum Implantat (10) verhindern bzw. verhindern können,
wobei die implantatseitigen Verdrehsicherungsstrukturen (16) jeweils zumindest eine Anlagefläche (22) aufweisen und/oder durch eine Anlagefläche (22) gebildet sind,
wobei die Anlageflächen (22) eben ausgestaltet sind und
eine Normale (N) aufweisen, welche in einer Ebene liegt, die von einer radialen Richtung (R) und der Längsrichtung (L) aufgespannt ist,
wobei die implantatseitigen Verdrehsicherungsstrukturen (16) verjüngend in Richtung der Längsrichtung (L) ausgebildet sind,
**dadurch gekennzeichnet, dass** der implantatseitige konische Abschnitt (14) einen Bereich aufweist, welcher verdrehsicherungsstrukturfrei ausgebildet ist.

2. Implantat (10) gemäß Anspruch 1,
wobei die implantatseitigen Verdrehsicherungsstrukturen (16) sich ausschließlich im implantatseitigen konischen Abschnitt (14) erstrecken.

3. Implantat (10) gemäß einem der vorhergehenden Ansprüche,
wobei der implantatseitige konische Abschnitt (14) ein distales Ende des implantatseitigen Anordnungsbereichs (12) in Richtung der Längsrichtung (L) ausbildet.

4. Implantat (10) gemäß einem der vorhergehenden Ansprüche,
wobei der implantatseitige Anordnungsbereich (12) einen zylindrischen Abschnitt (18) aufweist,
wobei der zylindrische Abschnitt (18) dazu ausgelegt ist, eine Axialführung für den Aufbau (50) auszubilden.

5. Implantat (10) gemäß Anspruch 4,
wobei der zylindrische Abschnitt (18) sich in Längsrichtung (L) an den implantatseitigen konischen Abschnitt (14) anschließt.

6. Implantat (10) gemäß einem der vorhergehenden Ansprüche,
wobei der implantatseitige Anordnungsbereich (12) einen Gewindeabschnitt (20) aufweist.

7. Implantat (10) gemäß Anspruch 6,
wobei der Gewindeabschnitt (20) sich in Längsrichtung (L) an den zylindrischen Abschnitt (18) anschließt.

8. Implantat (10) gemäß einem der vorhergehenden Ansprüche,
wobei der verdrehsicherungsstrukturfreie Bereich des implantatseitigen konischen Abschnitts (14) eine dem distalen Ende des implantatseitigen Anordnungsbereichs (12) in Richtung der Längsrichtung (L) gegenüberliegenden Endabschnitt des implantatseitigen konischen Abschnitts (14) ausbildet.

9. Implantat (10) gemäß einem der vorhergehenden Ansprüche,
wobei die implantatseitigen Verdrehsicherungsstrukturen (16), insbesondere die Anlageflächen (22), einen ersten implantatseitigen Verjüngungswinkel (W1) mit der Längsrichtung (L) ausbilden und/oder bilden, insbesondere in einem Bereich von 8° bis 14°, bevorzugt in einem Bereich von 10° bis 12°.

10. Implantatsystem (1) umfassend ein Implantat (10) gemäß einem der Ansprüche 1 bis 9 und einen Aufbau (50) und ein Verbindungsgewindestift (80).

11. Implantatsystem (1) gemäß Anspruch 10,
wobei der Aufbau (50), insbesondere Zahnimplantataufbau,
umfasst
einen, insbesondere außen liegenden, Verbindungsbereich (52),
wobei der Verbindungsbereich (52) dazu ausgelegt ist, zumindest abschnittsweise mit einem Implantat (10) nach einem der vorhergehenden Ansprüche zu kontaktieren,
wobei der Verbindungsbereich (52) einen aufbauseitigen konischen Abschnitt (54) aufweist,
wobei der aufbauseitige konische Abschnitt (54) aufbauseitige Verdrehsicherungsstrukturen (56) aufweist,
wobei der Aufbau (50) sich in eine Längserstreckungsrichtung (L2) erstreckt, und
wobei die aufbauseitigen Verdrehsicherungsstrukturen (56) derart ausgebildet sind, dass diese formschlüssig eine Verdrehung des Aufbaus (50) um die Längserstreckungsrichtung (L2) relativ zum Implantat (10) verhindern bzw. verhindern können.

12. Implantatsystem (1) gemäß Anspruch 11,
wobei die aufbauseitigen Verdrehsicherungsstrukturen (56) sich ausschließlich im aufbauseitigen konischen Abschnitt (54) erstrecken.

## Claims

1. Implant (10), in particular a dental implant, for an implant system (1), comprising
an internal implant-side arrangement region (12),
wherein the implant-side arrangement region (12) is designed to make contact, at least in sections, with an abutment (50),
wherein the implant-side locating region (12) has an implant-side tapered portion (14),
wherein the implant-side tapered portion (14) has implant-side anti-rotation structures (16),
wherein the implant (10) extends in a longitudinal direction (L), and
wherein the implant-side anti-rotation structures (16) are formed such that they positively prevent or can prevent a rotation of the abutment (50) about the longitudinal direction (L) relative to the implant (10),
wherein the implant-side anti-rotation structures (16) each have at least one contact surface (22) and/or are formed by a contact surface (22),
wherein the contact surfaces (22) are flat and
have a normal (N) which lies in a plane spanned by a radial direction (R) and the longitudinal direction (L),
wherein the implant-side anti-rotation structures (16) are tapered in the direction of the longitudinal direction (L),
**characterized in that** the implant-side conical section (14) has a region which is formed without anti-rotation structures.

2. Implant (10) according to claim 1,
wherein the implant-side anti-rotation structures (16) extend exclusively in the implant-side conical section (14).

3. An implant (10) according to any one of the preceding claims,
wherein the implant-side conical portion (14) forms a distal end of the implant-side arrangement area (12) in the direction of the longitudinal direction (L).

4. Implant (10) according to any one of the preceding claims,
wherein the implant side location area (12) has a cylindrical section (18),
wherein the cylindrical portion (18) is adapted to form an axial guide for the abutment (50).

5. Implant (10) according to claim 4,
wherein the cylindrical portion (18) joins the implant-side conical portion (14) in the longitudinal direction (L).

6. An implant (10) according to any one of the preceding claims,
wherein the implant side location area (12) comprises a threaded portion (20).

7. Implant (10) according to claim 6,
wherein the threaded portion (20) joins the cylindrical portion (18) in the longitudinal direction (L).

8. Implant (10) according to any one of the preceding claims,
wherein the anti-rotation structure-free region of the implant-side conical portion (14) forms an end portion of the implant-side conical portion (14) opposite the distal end of the implant-side attachment region (12) in the direction of the longitudinal direction (L).

9. Implant (10) according to one of the preceding claims,
wherein the implant-side anti-rotation structures (16), in particular the contact surfaces (22), form and/or form a first implant-side taper angle (W1) with the longitudinal direction (L), in particular in a range from 8° to 14°, preferably in a range from 10° to 12°.

10. An implant system (1) comprising an implant (10) according to any one of claims 1 to 9 and an abutment (50) and a connecting threaded pin (80).

11. Implant system (1) according to claim 10,
wherein the abutment (50), in particular dental implant abutment, comprises
a, in particular externally located, connecting region (52),
wherein the connecting region (52) is designed to contact, at least in sections, an implant (10) according to one of the preceding claims,
wherein the connection region (52) has an abutment-side conical portion (54),
the body-side tapered portion (54) having abutment-side anti-rotation structures (56),
wherein the abutment (50) extends in a longitudinal direction (L2), and
wherein the anti-rotation structures (56) on the abutment side are designed in such a way that they positively prevent or can prevent a rotation of the abutment (50) about the longitudinal extension direction (L2) relative to the implant (10).

12. Implant system (1) according to claim 11,
wherein the abutment-side anti-rotation structures (56) extend exclusively in the abutment-side conical portion (54).

## Revendications

1. Implant (10), en particulier implant dentaire, pour un système d'implant (1), comprenant une zone de positionnement (12) côté implant, située à l'intérieur,
dans lequel
la zone de positionnement (12) côté implant est conçue pour entrer en contact au moins localement avec un pilier (50),
la zone de positionnement (12) côté implant comprend une portion conique (14) côté implant,
la portion conique (14) côté implant présente des structures anti-rotation (16) côté implant,
l'implant (10) s'étend dans une direction longitudinale (L), et
les structures anti-rotation (16) côté implant sont conçues de manière à empêcher ou pouvoir empêcher par complémentarité de forme une rotation du pilier (50) par rapport à l'implant (10) autour de la direction longitudinale (L),
les structures anti-rotation (16) côté implant présentent chacune au moins une surface d'appui (22) et/ou sont formées par une surface d'appui (22),
les surfaces d'appui (22) sont conçues de manière plane et présentant une normale (N) qui se trouve dans un plan défini par une direction radiale (R) et par la direction longitudinale (L),
les structures anti-rotation (16) côté implant sont conçues de manière à se rétrécir dans le sens de la direction longitudinale (L),
**caractérisé en ce que**
la portion conique (16) côté implant présente une zone qui est exempte de structure anti-rotation.

2. Implant (10) selon la revendication 1,
dans lequel
les structures anti-rotation (16) côté implant s'étendent exclusivement dans la portion conique (14) côté implant.

3. Implant (10) selon l'une des revendications précédentes,
dans lequel
la portion conique (14) côté implant forme une extrémité distale de la zone de positionnement (12) côté implant dans le sens de la direction longitudinale (L).

4. Implant (10) selon l'une des revendications précédentes,
dans lequel
la zone de positionnement (12) côté implant comprend une portion cylindrique (18),
la portion cylindrique (18) est conçue pour former un guidage axial pour le pilier (50).

5. Implant (10) selon la revendication 4,
dans lequel
la portion cylindrique (18) se raccorde à la portion conique (14) côté implant dans la direction longitudinale (L).

6. Implant (10) selon l'une des revendications précédentes,
dans lequel
la zone de positionnement (12) côté implant comprend une portion filetée (20).

7. Implant (10) selon la revendication 6,
dans lequel
la portion filetée (20) se raccorde à la portion cylindrique (18) dans la direction longitudinale (L).

8. Implant (10) selon l'une des revendications précédentes,
dans lequel
la zone exempte de structure anti-rotation de la portion conique (14) côté implant forme une portion d'extrémité de la portion conique (14) côté implant opposée à l'extrémité distale de la zone de positionnement (12) côté implant dans la direction longitudinale (L).

9. Implant (10) selon l'une des revendications précédentes,
dans lequel
les structures anti-rotation (16) côté implant, en particulier les surfaces d'appui (22), forment et/ou définissent un premier angle de rétrécissement (W1) côté implant avec la direction longitudinale (L), en particulier compris dans une plage de 8° à 14°, de préférence dans une plage de 10° à 12°.

10. Système d'implant (1) comprenant un implant (10) selon l'une des revendications 1 à 9 et un pilier (50) et une tige de liaison filetée (80).

11. Système d'implant (1) selon la revendication 10,
dans lequel
le pilier (50), en particulier le pilier d'implant dentaire, comprend une zone de liaison (52), en particulier située à extérieure,
la zone de liaison (52) est conçue pour entrer en contact, au moins localement, avec un implant (10) selon l'une des revendications précédentes,
la zone de liaison (52) comprend une portion conique (54) côté pilier,
la portion conique (54) côté pilier présente des structures anti-rotation (56) côté pilier,
le pilier (50) s'étend dans une direction d'extension longitudinale (L2), et
les structures anti-rotation (56) côté pilier sont conçues de manière à empêcher ou pouvoir empêcher par complémentarité de forme une rotation du pilier (50) par rapport à l'implant (10) autour de la direction d'extension longitudinale (L2).

12. Système d'implant (1) selon la revendication 11,
dans lequel
les structures anti-rotation (56) côté pilier s'étendent exclusivement dans la portion conique (54) côté pilier.
